# EUROPÄISCHE PATENTSCHRIFT

(11) **EP 0 483 721 B1**
(45) Veröffentlichungstag und Bekanntmachung des Hinweises auf die Patenterteilung: **19.04.1995**
(21) Anmeldenummer: 91118345.7
(22) Anmeldetag: 28.10.1991
(51) Int. Cl.: C09K 3/18

(54) **Flüssiges Enteisungsmittel auf der Basis von Acetaten und Verfahren zum Schmelzen von Schnee und Eis auf Verkehrsflächen mit Hilfe dieses Mittels**
Liquid deicing agent based on acetates and process for melting snow and ice on traffic surfaces therewith
Agent de dégivrage liquide à base d'acétates et procédé pour faire fondre la neige et la glace sur les voies de circulation à l'aide de cet agent

(30) Priorität: 02.11.1990 DE 4034792
(43) Veröffentlichungstag der Anmeldung: 06.05.1992
(73) Patentinhaber: HOECHST AKTIENGESELLSCHAFT, 65926 Frankfurt am Main (DE)
(72) Erfinder: Stankowiak, Achim, Dr., W-8269 Burgkirchen (DE); Kapfinger, Josef, W-8335 Falkenberg/Zell (DE); Bettermann, Gerhard, Dr., W-5042 Erftstadt (DE)

(56) Entgegenhaltungen:
- EP-A- 0 375 214
- DE-A- 3 209 128
- DE-A- 4 034 217
- US-A- 4 377 488
- Kirk-Othmer, Encycl. Chem. Techn. Third Edition, Vol. 3, pages 79, 89-95

## Beschreibung

Die Erfindung betrifft ein flüssiges Enteisungsmittel auf der Basis von Alkalimetallacetaten. Die Erfindung betrifft ferner ein Verfahren zum Schmelzen von Schnee und Eis auf Verkehrsflächen unter Verwendung dieses Mittels.

Schnee und/oder Eis auf Straßen, Radfahrwegen, Gehwegen, Brücken, Sportplätzen, Flugplätzen und dergleichen (im folgenden Verkehrsflächen genannt) führen zu einer wesentlichen Beeinträchtigung des Verkehrsablaufes und der Verkehrssicherheit. Es ist deshalb schon seit langem bekannt, auf solchen Flächen ein Mittel zum Schmelzen oder Auftauen von Schnee und Eis (Enteisungsmittel) aufzubringen, vergleich zum Beispiel US-Patentschrift 4,283,297.

Die Forderungen, die ein Enteisungsmittel erfüllen sollte, sind sehr vielseitig. Die Materialien, aus denen die in Rede stehenden Flächen aufgebaut sind, beispielsweise Beton, dürfen durch das Enteisungsmittel nicht beschädigt oder gar zersetzt werden. Wesentlich ist ferner, daß eine korrodierende Wirkung auch auf Metalle ausgeschlossen ist. Es muß ferner gewährleistet sein, daß keine Brandgefahr infolge leichter Entflammbarkeit und Brennbarkeit des Enteisungsmittels gegeben ist. Seine Zusammensetzung sollte für Tier und Mensch physiologisch weitgehend unbedenklich sein. Da das aufgebrachte Mittel auch ins Abwasser gelangen kann, ist die biologische Abbaubarkeit eine weitere Forderung. Das Auftaumittel kann nicht nur in das Abwasser, sondern auch auf landwirtschaftlich genutzten Boden gelangen, dem ebenfalls kein Schaden zugefügt werden sollte. Wesentlich ist ferner, daß eine sehr rasche Auftauung erreicht wird. Von der wirtschaftlichen Seite her ist es schließlich notwendig, daß eine nur geringe Menge an Enteisungsmittel erforderlich ist und daß es wenig kostet.

Im Stand der Technik sind zahlreiche Alkalimetall- und Erdalkalimetallsalze von anorganischen und organischen Säuren als Enteisungsmittel beschrieben, wobei ein Salz allein oder eine Kombination von zwei oder mehreren Salzen eingesetzt wird. Als Beispiele von solchen Salzen seien genannt: Natriumchlorid, Calciumchlorid, Calciumbromid, Magnesiumchlorid, Natriumcarbonat, Natriumformiat, Natriumacetat, Kaliumacetat, Calciumacetat, Magnesiumacetat, Natriumlactat und dergleichen.

So werden in den US-Patentschriften 4,388,203; 4,728,393 und 4,855,071 feste und flüssige Enteisungsmittel beschrieben, die Salze aus der Gruppe der Alkalimetallcarboxylate, Erdalkalimetallcarboxylate und Alkalimetall- oder Erdalkalimetallchloride in einer mehr oder weniger großen Menge enthalten. Im einzelnen besteht das in der US-Patentschrift 4,388,203 beschriebene Enteisungsmittel im wesentlichen aus Wasser, Glykolen, einem Verdickungsmittel und einem Alkalimetallacetat und/oder einem Erdalkalimetallchlorid. Die aus der US-Patentschrift 4,728,393 bekannte Enteisungsmittel-Komposition wird aus Abfallflüssigkeiten aus der Papierherstellung gewonnen und enthält unter anderem Alkalimetall- und/oder Erdalkalimetallacetate, -formiate, -lactate und -carbonate. In der US-Patentschrift 4,855,071 wird schließlich ein festes Enteisungsmittel beschrieben, das aus Alkalimetall- und/oder Erdalkalimetallcarboxylaten mit 1 bis 4 C-Atomen besteht, die nach einem bestimmten Verfahren hergestellt worden sind, wobei Calcium/Magnesiumacetate als besonders geeignet hervorgehoben werden.

Die bekannten Enteisungsmittel auf der Basis von Acetaten aus der Gruppe der Alkalimetallacetate und Erdalkalimetallacetate erfüllen zwar mehrere der oben erwähnten Forderungen, sie lassen aber bezüglich Korrosion zu wünschen übrig. Von den erwähnten Forderungen erfüllen sie zum Beispiel jene nach kurzer Auftauzeit, nach mehr oder weniger geringem Mengenbedarf und relativ niedrigem Preis. Ein weiterer Vorteil der Acetate liegt darin, daß sie aufgrund ihrer Wasserlöslichkeit auch in Form einer wäßrigen Lösung eingesetzt werden können, was häufig erwünscht ist. Die an sich vorteilhaften flüssigen Enteisungsmittel auf der Basis der genannten Acetate sind jedoch bezüglich Metallkorrosion verbesserungsbedürftig. So wirken die in Rede stehenden wäßrigen Enteisungsmittel auf Metalle, wie Aluminium, Magnesium, Stahl und verzinkter Stahl, mehr oder weniger korrodierend. Sie zeigen ferner eine relativ geringe Hemmung im Hinblick auf die sogenannte Wasserstoffversprödung. Unter Wasserstoffversprödung versteht man bekanntlich die Versprödung, das ist die Abnahme der Festigkeit, von metallischen Werkstoffen durch Einwirkung von Wasserstoff. Die Anwesenheit von Wasserstoff resultiert unter anderem aus elektrochemischen Reaktionen an der Oberfläche des metallischen Werkstoffes (Kathoden/Anoden-Prozesse). Die Wasserstoffversprödung ist vor allem dort ein großes Problem, wo der metallische Werkstoff hohen Beanspruchungen standhalten soll, was zum Beispiel bei Fahrgestellen von Flugzeugen der Fall ist, die in der Regel aus hochlegiertem Stahl bestehen. Die Beeinträchtigung auch nur eines Teiles des Fahrgestelles durch irgendeine Art von Korrosion führt klarerweise zu vielen Schwierigkeiten. Die Eigenschaft der relativ geringen Inhibierung bezüglich Wasserstoffversprödung stellt also einen weiteren Nachteil der in Rede stehenden flüssigen Enteisungsmittel dar, insbesondere dann, wenn sie auf Verkehrsflächen von Flugzeugen, wie Start- und Landebahnen, Stellplätzen und dergleichen, eingesetzt werden.

Es sind bereits Versuche unternommen worden, die erwähnten Probleme bei Enteisungsmitteln auf der Basis von Acetaten und analogen Salzen mit Hilfe von Inhibitoren zu lösen. So wird in der neueren European Patent Application No. 0 375 214-A1 ein flüssiges Enteisungsmittel beschrieben, das im wesentlichen aus 45 bis 60 Gew.-% von mindestens einem Alkalimetallacetat und/oder Alkalimetallformiat, 0,1 bis 0,4 Gew.-% von mindestens einem Alkalimetallphosphat und 0,2 bis 0,6 Gew.-% von mindestens einem Alkalimetallnitrit und aus Wasser als Rest auf 100 Gew.-% besteht, Gewichtsprozente bezogen auf das Gewicht des Enteisungsmittels. Dieses Enteisungsmittel mit der Inhibitorkombination Alkalimetallphosphat/Alkalimetallnitrit weist zwar im Vergleich zu den bekannten Mitteln ein verbessertes Verhalten bezüglich der in Rede stehenden Metallkorrosion und Wasserstoffversprödung auf, nachteilig ist aber sein Nitritgehalt.

Die Aufgabe der Erfindung besteht demnach darin, ein flüssiges Enteisungsmittel auf der Basis von Alkalimetallacetaten zu schaffen, das eine hohe Inhibierung in der Metallkorrosion und in der Wasserstoffversprödung aufweist, wobei diese Inhibierung auf einem praktisch unbedenklichen Inhibitorsystem beruht. Das neue Enteisungsmittel soll insbesondere auch für die Behandlung von mit Eis und/oder Schnee bedeckten Flugzeugverkehrsflächen geeignet sein.

Das erfindungsgemäße flüssige Enteisungsmittel besteht im wesentlichen aus
a) 15 bis 70 Gew.-%, vorzugsweise 25 bis 60 Gew.-%, von mindestens einem Alkalimetallacetat,
b) 0,01 bis 1 Gew.-%, vorzugsweise 0,03 bis 0,5 Gew.-%, von mindestens einer wasserlöslichen Triazolverbindung oder mindestens einer wasserlöslichen Imidazolverbindung oder einer Mischung der beiden und
b') 0,01 bis 0,5 Gew.-%, vorzugweise 0,03 bis 0,2 Gew.-%, von mindestens einem Alkalimetallphosphat und
c) Wasser, als Rest auf 100 Gew.-% [Gewichtsprozente bezogen auf das Gewicht des Enteisungsmittels, das heißt auf die Gewichtssumme aus den Komponenten a), b), b') und c)].

Das Alkalimetallacetat des erfindungsgemäßen Enteisungsmittels ist vorzugsweise Natriumacetat und/oder Kaliumacetat, wobei Kaliumacetat bevorzugt ist. Die Konzentration an Acetat im wäßrigen Enteisungsmittel kann innerhalb weiter Grenzen variieren. Sie richtet sich vor allem nach der Löslichkeit des Acetates im Wasser (es soll eine im wesentlichen klare Lösung vorliegen) und nach der Menge an Lösung, die man auf die zu behandelnde Verkehrsfläche aufzubringen beabsichtigt. Mit einer konzentrierteren Lösung wird man eine geringere Menge benötigen, um Eis und/oder Schnee aufzutauen, als mit einer weniger konzentrierten. Die Konzentration liegt demnach bei 15 bis 70 Gew.-%, vorzugsweise 25 bis 60 Gew.-%, Gewichtsprozente bezogen auf das Gewicht des Enteisungsmittels.

Die Inhibierung des erfindungsgemäßen wäßrigen Enteisungsmittels beruht auf Triazolverbindungen und/oder Imidazolverbindungen, die in der einzusetzenden Menge im fertigen wäßrigen Enteisungsmittel gelöst vorliegen. Geeignete wasserlösliche Triazole sind Triazol selbst und dessen Derivate, wie Alkyltriazole, zum Beispiel Methyltriazol; Benzotriazole, zum Beispiel Benzotriazol, Aminobenzotriazol und Nitrobenzotriazol; und Tolyltriazol. Die bevorzugten Triazole sind Benzotriazol (1H-Benzotriazol oder 1,2,3-Benzotriazol) und Tolyltriazol (1H-Methylbenzotriazol, in der Regel ein Isomerengemisch). Geeignete wasserlösliche Imidazole sind das Imidazol (1H-Imidazol) und seine Derivate, wie Methylimidazol und Benzimidazol, wobei Imidazol bevorzugt ist. Von den beiden Verbindungen, Triazole und Imidazole, sind die Triazole bevorzugt und von diesen, wie bereits erwähnt, Benzotriazol und Tolyltriazol. Die in Rede stehenden Verbindungen sind im Handel im allgemeinen in Form von Pulver, Kristallen, Nadeln und dergleichen erhältlich. Die Menge an Triazol und/oder Imidazol im erfindungsgemäßen Enteisungsmittel beträgt 0,01 bis 1 Gew.-%, bezogen auf das Gewicht des Enteisungsmittels. Mit weniger als 0,01 Gew.-% wird der angestrebte Effekt kaum mehr erreicht und mehr als 1 Gew.-% ist im allgemeinen nicht mehr zweckmäßig. Die bevorzugte Menge an Triazol und/oder Imidazol beträgt deshalb 0,03 bis 0,5 Gew.-%, bezogen auf das Gewicht des Enteisungsmittels.

Das Alkalimetallphosphat ist vorzugsweise Natriumphosphat und/oder Kaliumphosphat. Die Menge an Alkalimetallphosphat soll 0,01 bis 0,5 Gew.-% betragen, vorzugsweise 0,03 bis 0,2 Gew.-%, Gewichtsprozente bezogen auf das Gewicht des Enteisungsmittels.

Die Herstellung des erfindungsgemäßen flüssigen Enteisungsmittels erfolgt durch Zusammenmischen der einzelnen Komponenten. Dies wird bevorzugt in der Weise durchgeführt, daß das Lösungsmittel Wasser (vollentsalztes Wasser) in einem Behälter vorgelegt und die weiteren Komponenten unter Rühren und gegebenenfalls unter Erwärmen dazugegeben werden, wobei die angestrebte Lösung erhalten wird. Da alle Komponenten im Wasser löslich sind, stellt das erfindungsgemäße Enteisungsmittel eine klare, mehr oder weniger niedrig viskose und daher gut und leicht handhabbare Flüssigkeit dar. Der pH-Wert des erfindungsgemäßen wäßrigen Enteisungsmittels ist im allgemeinen höher als 8. Bevorzugt ist ein pH-Wert von 8 bis 12, vorzugsweise von 9 bis 11. Sofern der genannte pH-Wert nach dem Zusammenmischen der Komponenten nicht ohnehin vorliegt, wird man ihn durch Zugabe von vorzugsweise Alkalimetallverbindungen, insbesondere Alkalimetallhydroxid, wie Natrium- oder Kaliumhydroxid, auf den gewünschten Wert einstellen.

Das erfindungsgemäße Verfahren zum Schmelzen von Schnee und Eis auf Verkehrsflächen ist dadurch gekennzeichnet, daß eine wirksame Menge des beschriebenen Enteisungsmittels auf der zu behandelnden Verkehrsfläche aufgebracht wird, das heißt eine solche Menge, daß die angestrebte Beseitigung von Eis und/oder Schnee erreicht wird. Diese Menge hängt vor allem von der Außentemperatur und der vorhandenen Eis- und/oder Schneemenge ab und liegt im allgemeinen bei 10 bis 100 g pro m² eis- und/oder schneebedeckter Fläche. Das Aufbringen des flüssigen Enteisungsmittels kann zum Beispiel mit Hilfe der üblichen Sprühfahrzeuge durchgeführt werden.

Das erfindungsgemäße Enteisungsmittel besitzt eine Reihe von Vorteilen. So erfüllt es die eingangs genannten Forderungen und weist neben kurzer Auftauzeit vor allem eine hohe Inhibierung der Metallkorrosion und der Wasserstoffversprödung auf. Was das erfindungsgemäße Enteisungsmittel besonders auszeichnet, ist die Tatsache, daß alle diese Eigenschaften mit unbedenklichen Inhibitoren erreicht werden. Aufgrund dieser besonderen Eigenschaften ist das neue Enteisungsmittel gerade auch für Flugzeugverkehrsflächen, wie Start- und Ladebahnen, Abstellplätze, Busrouten und dergleichen, besonders geeignet.

Die Erfindung wird nun anhand von erfindungsgemäßen Beispielen und eines Vergleichsbeispiels noch näher erläutert.

Die Enteisungsmittel der nachstehenden erfindungsgemäßen Beispiele 1 bis 3 und des Vergleichsbeispiels wurden durch Mischen der Komponenten hergestellt. Die angegebenen Prozentmengen der einzelnen Komponenten sind Gewichtsprozente.

### Beispiel 1

25,00 % Kaliumacetat
0,05 % Benzotriazol
0,03 % Natriumphosphat
74,92 % Wasser

### Beispiel 2

50,00 % Kaliumacetat
0,10 % Tolyltriazol
0,05 % Natriumphosphat
49,85 % Wasser

### Beispiel 3

60,00 % Kaliumacetat
0,25 % Imidazol
0,15 % Kaliumphosphat
39,60 % Wasser

### Vergleichsbeispiel

50,00 % Kaliumacetat
0,20 % Kaliumphosphat
0,40 % Natriumnitrit
49,40 % Wasser
Die Enteisungsmittel der Beispiele 1 bis 3 und des Vergleichsbeispiels wurden bezüglich Metallkorrosion und Wasserstoffversprödung getestet. Der Test auf Metallkorrosion erfolgte nach ASTM F483 (ASTM = American Society for Testing and Materials) und nach dem sogenannten Sandwich Corrosion Test von Boeing Commerical Airplane Company, Seattle, USA. Der Test auf Wasserstoffversprödung erfolgte nach ASTM F519.

Beim Test ASTM F483 wird der gewogene Prüfkörper in das zu prüfende Enteisungsmittel, das auf einer Temperatur von 35 °C gehalten wird, 24 Stunden lang bei Normaldruck eingetaucht, worauf wiederum sein Gewicht bestimmt wird. Das Ergebnis des Korrosionstestes wird als Gewichtsdifferenz der beiden Gewichtsbestimmungen in Milligramm pro Prüfkörper angegeben. Dieser Test wurde mit den Metallen Aluminium, und zwar Aluminium clad 2024-T0, Magnesium, und zwar Magnesium AMS 4375, Stahl C45 und Stahl verzinkt ST10 durchgeführt.

Beim Sandwich Corrosion Test von Boeing, der eine besonders scharfe Korrosionsprüfung am Metall Aluminium darstellt (Aluminium clad 7075-T6), wird von einer speziellen Prüfkörperform ausgegangen. Der Prüfkörper besteht aus zwei gleichen Aluminiumplättchen und einem mit dem zu prüfenden Enteisungsmittel getränkten Filterpapier; die drei Teile werden in Sandwich-Form zusammengefügt, wobei das getränkte Filterpapier in der Mitte liegt, und mit Hilfe eines wasserbeständigen Klebebandes festgehalten. Dieser Prüfkörper wird in einem Trockenschrank bei 35 °C, Normaldruck und der relativen Feuchtigkeit der Umgebung 8 Stunden lang gehalten und dann bei 35 °C, Normaldruck und einer relativen Feuchtigkeit von 90 bis 100 % 16 Stunden lang gehalten. An diese beiden Behandlungsschritte folgen noch weitere sieben Schritte mit den genannten Bedingungen und ebenfalls 8 und 16 Stunden in abwechselnder Folge. Nach dem neunten Behandlungsschritt (das ist ein 8stündiger) folgt noch ein zehnter, bei dem der Prüfkörper bei 35 °C, Normaldruck und einer relativen Feuchtigkeit von 95 bis 100 % 64 Stunden lang gehalten wird (die gesamte Testzeit beträgt also 168 Stunden). Das Testergebnis wird als visuelle Feststellung angegeben, ob die beiden Aluminiumplättchen Korrosionserscheinungen aufweisen oder nicht. Der Test ist also erfüllt, wenn beide Al-Plättchen keinerlei Korrosion zeigen.

Mit dem Test ASTM F519 wird die Versprödung von Stahl durch Wasserstoff gemessen, der sich beim Eintauchen eines unter Spannung stehenden Prüfkörpers aus dem Stahl MIL-S-5000 (ein Chrom-Nickel-Stahl) in der zu prüfenden Flüssigkeit bildet. Bei diesem Test wird also der Stahlprüfkörper in einer Einspannvorrichtung einer bestimmten Spannung ausgesetzt und so in das zu prüfende Enteisungsmittel, das auf 23 °C gehalten wird, 150 Stunden lang eingetaucht. Das Testergebnis wird als visuelle Feststellung angegeben, ob der unter Spannung gestandene Stahlprüfkörper gebrochen ist oder nicht. Der Test ist also erfüllt, wenn der Prüfkörper nicht gebrochen ist.

### Testergebnisse:

Alle erfindungsgemäßen Enteisungsmittel erfüllen den Sandwich Corrosion Test von Boeing und den Wasserstoffversprödungstest ASTM 519. Dies gilt auch für das Enteisungsmittel des Vergleichsbeispiels. Die Ergebnisse des ASTM F483 Korrosionstestes sind in der nachstehenden Tabelle zusammengefaßt und zeigen, daß die erfindungsgemäßen Enteisungsmittel auch bezüglich Metallkorrosion gut inhibiert sind. Was die Auftauzeit der erfindungsgemäßen Enteisungsmittel betrifft, so erfüllen sie das in der Praxis geforderte schnelle Auftauen von Eis und Schnee. Die erfindungsgemäßen Enteisungsmittel weisen also eine hohe Inhibierung bezüglich Metallkorrosion als auch bezüglich Wasserstoffversprödung und darüberhinaus auch Nitritfreiheit auf. Aufgrund dieser speziellen Eigenschaftskombination sind sie besonders vorteilhaft und erfüllen ein seit langem bestehendes Bedürfnis.

**TABELLE 1**

| Testergebnisse der Metallkorrosion nach ASTM F483 in Milligramm Gewichtsdifferenz pro Metallprüfkörper | | | | |
|---|---|---|---|---|
| Enteisungsmittel A*) | Aluminium (mg) | Magnesium (mg) | Stahl (mg) | verzinkter Stahl (mg) |
| 1 | ±0 | -7,4 | +0,3 | -23,0 |
| 2 | ±0 | -14,7 | +0,1 | -2,6 |
| 3 | ±0 | +11,3 | -0,2 | -1,4 |
| Vergleich | +0,1 | +18,4 | +0,2 | -27,8 |
| geforderte Werte | ±10 | ±20 | ±30 | ±30 |

| Enteisungsmittel B**) | | | | |
|---|---|---|---|---|
| 1 | +0,1 | -11,0 | -0,1 | -17,1 |
| 2 | +0,1 | -11,8 | +0,1 | -4,8 |
| 3 | +0,1 | +3,5 | -0,2 | -1,4 |
| Vergleich | +0,2 | +19,2 | +0,2 | -10,8 |
| geforderte Werte | ±10 | ±20 | ±30 | ±30 |

| | | | | |
|---|---|---|---|---|
| *) Die Enteisungsmittel A sind die Enteisungsmittel der Beispiele 1 bis 3 und des Vergleichsbeispiels. | | | | |
| **) Die Enteisungsmittel B sind die Enteisungsmittel A, verdünnt mit vollentsalztem Wasser im Volumenverhältnis 1 : 1. | | | | |

## Patentansprüche

1. Flüssiges Enteisungsmittel auf der Basis von Alkalimetallacetaten, dadurch gekennzeichnet, daß es aus
a) 15 bis 70 Gew.-% von mindestens einem Alkalimetallacetat,
b) 0,01 bis 1 Gew.-% von mindestens einer wasserlöslichen Triazolverbindung oder mindestens einer wasserlöslichen Imidazolverbindung oder einer Mischung der beiden und
b') 0,01 bis 0,5 Gew.-% von mindestens einem Alkalimetallphosphat und
c) Wasser, als Rest auf 100 Gew.-%, besteht.

2. Enteisungsmittel nach Anspruch 1, dadurch gekennzeichnet, daß es aus
a) 25 bis 60 Gew.-% von mindestens einem Alkalimetallacetat,
b) 0,03 bis 0,5 Gew.-% von mindestens einer wasserlöslichen Triazolverbindung oder mindestens einer wasserlöslichen Imidazolverbindung oder einer Mischung der beiden und
b') 0,03 bis 0,2 Gew.-% von mindestens einem Alkalimetallphosphat und
c) Wasser, als Rest auf 100 Gew.-%, besteht.

3. Enteisungsmittel nach Anspruch 1 oder 2, dadurch gekennzeichnet, daß die Komponente a) Natriumacetat oder Kaliumacetat oder einer Mischung der beiden ist, die Komponente b) Benzotriazol, Tolyltriazol und/oder Imidazol ist und die Komponente b') Natriumphosphat oder Kaliumphosphat oder einer Mischung der beiden ist.

4. Verfahren zum Schmelzen von Schnee und Eis auf Verkehrsflächen, dadurch gekennzeichnet, daß ein Enteisungsmittel gemäß Patentanspruch 1 in einer wirksamen Menge auf die zu behandelnden Verkehrsflächen aufgebracht wird.

## Claims

1. A liquid deicing agent based on alkali metal acetates, consisting essentially of
a) 15 to 70 % by weight of at least one alkali metal acetate,
b) 0.01 to 1 % by weight of at least one water-soluble triazole compound or at least one water-soluble imidazole compound or a mixture of the two and
b') 0.01 to 0.5 % by weight of at least one alkali metal phosphate and
c) water, as the remainder to make up to 100 % by weight.

2. A de-icing agent as claimed in claim 1, consisting essentially of
a) 25 to 60 % by weight of at least one alkali metal acetate,
b) 0.03 to 0.5 % by weight of at least one water-soluble triazole compound or at least one water-soluble imidazole compound or a mixture of the two and
b') 0.03 to 0.2 % by weight of at least one alkali metal phosphate and
c) water, as the remainder to make up to 100 % by weight.

3. A de-icing agent as claimed in claim 1 or 2, wherein the component a) is sodium acetate or potassium acetate or a mixture of the two, the component b) is benzotriazole, tolyltriazole and/or imidazole, and the component b') is sodium phosphate or potassium phosphate or a mixture of the two.

4. A process for melting snow and ice on traffic surfaces, which comprises applying an effective amount of a de-icing agent as claimed in patent claim 1 to the traffic surfaces to be treated.

## Revendications

1. Agent de dégivrage liquide à base d'acétates de métaux alcalins, caractérisé en ce qu'il est constitué par
a) 15 à 70 % en masse d'au moins un acétate de métal alcalin,
b) 0,01 à 1 % en masse d'au moins un composé de triazole soluble dans l'eau ou d'au moins un composé d'imidazole soluble dans l'eau ou d'un mélange des deux,
b') 0,01 à 0,5 % en masse d'au moins un phosphate de métal alcalin, et
c) de l'eau, pour compléter à 100 % en masse.

2. Agent de dégivrage selon la revendication 1, caractérisé en ce qu'il est constitué par
a) 25 à 60 % en masse d'au moins un acétate de métal alcalin,
b) 0,03 à 0,5 % en masse d'au moins un composé de triazole soluble dans l'eau ou d'au moins un composé d'imidazole soluble dans l'eau ou d'un mélange des deux,
b') 0,03 à 0,2 % en masse d'au moins un phosphate de métal alcalin, et
c) de l'eau, pour compléter à 100 % en masse.

3. Agent de dégivrage selon la revendication 1 ou 2, caractérisé en ce que le constituant a) est de l'acétate de sodium ou de l'acétate de potassium ou un mélange des deux, le constituant b) est du benzotriazole, du tolutriazole et/ou de l'imidazole, et le constituant b') est du phosphate de sodium ou du phosphate de potassium ou un mélange des deux.

4. Procédé pour faire fondre la neige et la glace sur des zones de circulation, caractérisé en ce que l'on applique un agent de dégivrage selon la revendication 1 en une quantité efficace sur les zones de circulation à traiter.
